# EUROPEAN PATENT SPECIFICATION

(11) **EP 2 139 191 B1**
(45) Date of publication and mention of the grant of the patent: **21.02.2018**
(21) Application number: 08104541.1
(22) Date of filing: 25.06.2008
(51) Int. Cl.: H04L 29/06

(54) **Method and device for processing data and system comprising such device**
Verfahren und Vorrichtung zur Bearbeitung von Daten und System mit einer derartigen Vorrichtung
Procédé et dispositif de traitement de données et système comprenant un tel dispositif

(43) Date of publication of application: 30.12.2009
(73) Proprietor: Nokia Solutions and Networks Oy, 02610 Espoo (FI)
(72) Inventor: Gordhan, Sagar, Walgall WS8 7BN (GB)
(74) Representative: Borgström, Markus

(56) References cited:
- WO-A1-02/10944
- US-A1- 2004 153 561
- US-A1- 2006 073 786
- US-A1- 2008 084 969
- US-B1- 6 384 821
- US-B1- 6 411 623

## Description

The invention relates to a method and to a device for processing data and to a system comprising such device.

**In the publication** US-B1-6 411 623 **(DEGOLLADO LEONARD [US] ET AL) 25 June 2002 (2002-06-25) a switched, digital high-broadband network is described which provides automated control and in-service and out-of-testing of analog video signals, encoded and decoded real time, into MPEG 2 digitized format.**

**From the publication** US 2004/153561 A1 **(DALAL AMY [US] ET AL) 5 August 2004 (2004-08-05) a streaming media quality assessment system is known comprising assessment servers, media clients, data collection points, helper agents, and report servers.**

**In the publication** US-B1-6 384 821 **(BORREL PAUL [US] ET AL) 7 May 2002 (2002-05-07) a method and apparatus for delivering 3D graphics in a networked environment using transparent video are described for seamlessly combining client-only rendering techniques with server-only rendering techniques.**

**Publication** US 2008/084969 A1 **(MOORE SEAN SAMUEL BUTLER [US]) 10 April 2008 (2008-04-10) discloses a bidirectional notification system and method for improving the quality of media in a packet switched transmission network.**

**In the publication** US 2006/073786 A1 **(SARKAR FALGUNI [US]) 6 April 2006 (2006-04-06) an architecture is described that facilitates initiation of a user feedback signal during a telephone call when perceiving reduced voice quality.**

WO 02/10944 A1 describes Systems and methods for service performance monitoring and management, fault monitoring and management, and repair in a video and data network. The method includes one or more users receiving the service. Additionally, a physical network transport in the video and data network is identified for the one or more users. Further, a virtual network transport in the video and data network is identified for the one or more users. The performance data through the physical network transport and the virtual network transport is monitored. Once the performance data is monitored, one or more threshold values for the one o or more users' service are determined and it is determined if the performance data violates at least one of the one or more threshold values. If a threshold value is violated or other network faults are detected, the faults in the network can be located and fixed, in accordance with various systems and methods.

Broadcasting services are well known and are commonly used to deliver audio and/or visual content to users. These users can be, e.g., customers of a broadcasting service provider, viewers of a television program or listeners to a radio program. More generally, an audio-visual delivery system is any system used to deliver audio and/or visual services such as (broadcast) television, (broadcast) radio or video on demand. For example, such systems include cable television and IP television systems as well as digital terrestrial and satellite systems that may comprise a return channel. Audio-visual content comprises audio and / or video content.

Service providers and network operators delivering audio-visual content via such audio-visual delivery system may further monitor a quality of the service (QoS). More specifically, the operator or provider may be interested in monitoring of an audio and/or a video service delivered to the user, in particular in any deterioration or impairment that the user may experience, e.g., black screen, video pixilation, audio-video lip sync problems and lack of audio is of interest.

Current monitoring and diagnostics systems for audio and/or visual quality rely solely on data analysis provided by various components of the end-to-end system, e.g., probes to monitor the video encoder parameters, the core and edge network routers, the access network DSLAMs, the DSL modems and set top boxes.

However, such data analysis as such cannot reveal actual quality impairments experienced by the user. For example, many monitoring and diagnostic systems rely on losses of data packets as a key criterion to determine quality issues. However, it is well understood that for audio-visual services, packet loss events may not result in an audio-visual quality impairment for the user.

Therefore solely relying on the loss of packet information, the service provider may waste resources and money on fixing problems that may not cause any service degradation.

It is a further disadvantage of current solutions is that resources of service providers and/or network operators are thus not efficiently used for fault finding and fault resolution.

The **problem** to be solved is to overcome the disadvantages as stated above and in particular to provide an efficient approach for better and more accurate determination of an audio and/or a visual quality of a delivered audio-visual content.

This problem is solved according to the features of the independent claims. Further embodiments result from the depending claims.

In order to overcome this problem, a method for processing data is suggested,
- wherein first data are generated by at least one user,
- wherein the first data are associated with a quality of an audio and/or video content, and
- wherein the first data are provided towards a first network.

Advantageously, at least one user generates and provides feedback information on the audio and/or video content. Consequently, quality impairments are restricted to those that are of relevance to the user. The provision of the feedback information furthermore enables monitoring of the relevant received quality by the service provider and/or the network operator. The user is preferably a user of the audio and/or video content. The user feedback is provided via a network that preferably carries and delivers the audio-visual content to the user. More generally the content may also be delivered via a further network different from the first network, outside any network for data transmission or it may not be delivered at all.

In an embodiment a method is suggested wherein the first data indicate at least one of the following:
- a loss of audio/video synchronism;
- a clipping audio;
- no audio;
- no picture;
- a blocky video;
- a picture with lines;
- no interactivity;
- a corrupted interactivity;
- a quality affecting event.

Hence, the user feedback can be classified in easily usable categories. This provides the advantage of usability and broad user acceptance. A quality affecting event may preferably be or be related to any impairment of the quality the user may report or indicate. The first data indicate and/or represent such impairments when being reported by the user. Loss of audio/video synchronism means loss of synchronism of audio and video information.
Interactivity is any data and/or application associated with an audio-visual content for purposes of enhanced enjoyment of the content, e.g. a voting interactivity application associated with a game program. No interactivity means that interactivity is missing, i.e. presence of interactivity is expected but when the user tries to initiate it, the interactive data and/or application does not appear. Corrupted interactivity means that when an interactive data and/or application is viewed, it is not fully complete, e.g. it has missing data or it does not seem synchronized with the audio-visual content.

According to another embodiment
- the first data are generated by selection from a menu displayed on a screen, and
- said selection is done via an input device of or being associated with a television, a set top box, or any other user located equipment.

The screen may be and/or may comprise a display, in particular a display of a mobile phone, a television or a projection. Preferably the user is consuming the service via a television and the user's interface to the service can be the set top box remote control. Whenever the user is using the service and indicates an audio-visual impairment, s/he presses a key on the remote control which brings up a menu showing a selection of impairments that could have occurred. The user selects the option that most accurately represents the impairment. With the menu driven user feedback easy usage is enabled and the input is provided in a form the user is accustomed to. User located equipment can also be computers or recorders, e.g., hard disc (HD) recorders or video tape recorders that can be deployed in the delivery path of the audio-visual content or in the path for providing the user's feedback regarding the quality of audio and/or video content.

The input device may also be a local control of any user located equipment. Furthermore, a remote control input device may be any device providing control functionality similar to that of a remote control of a television or of a set top box, e.g., a mobile phone or a personal digital assistant.

Pursuant to a further embodiment, the first data are generated during a program provided as the audio and/or video content or during viewing, listening or any other utilization of the audio and/or video content. Such utilization may be an extraction or any processing of pictures, frames, frame sequences, scenes, subtitles, music or the like, which are provided as part of the audio-visual content.

Advantageously, feedback can be provided from the user to the operator substantially at the time of the impairment.

In another embodiment,
- second data are determined,
- the second data are associated with the quality of the audio and/or video content, and
- the second data are provided towards the first network and/or the first and the second data are combined for evaluation of the quality of the audio and/or video content.

Thus further data may advantageously influence or determine the quality. This may allow a more accurate assessment of the audio and/or visual quality of the delivered audio-visual content. These second data are preferably determined on base on a fault-detection, a performance degradation, a threshold crossing, a measurement or any other anomaly. The detection is preferably done automatically or on a more or less regular routine test, e.g., on demand. Such detection may comprise a detection of a beginning of a faulty or degraded operation as well as an end thereof.

Alternatively or in addition, user feedback data and detected deteriorated audio and/or video data can be combined for determination of the received quality. By this, the advantage of local availability of the evaluated quality e.g. in a set top box is provided implying quick and direct access of the user to the evaluated quality even without network access of the set top box. As well by restriction to the evaluated quality the reduction of information, which has to be stored locally or which has to be transferred via the network, may be provided.

According to another embodiment,
the second data are determined by at least one of the following:
- a set top box;
- a television;
- any user located equipment.

Advantageously, a functionality provided in a set top box, may be integrated in a television comprising integrated termination capabilities for cable, satellite, terrestrial or IP-based delivery of the audio-visual content. Furthermore, the delivery path may include other user-located equipment, e.g., video recorders, CD/DVD players with detection capability for quality related data.

According to another embodiment the second data are determined based on at least one of the following:
- a loss of audio/video synchronism;
- a clipping audio;
- no audio;
- no picture;
- a blocky video;
- a picture with lines;
- no interactivity;
- a corrupted interactivity;
- a quality affecting event.

Advantageously, this allows for an automatic detection of quality impairment, e.g., by algorithms evaluating the audio and/or video stream(s) accordingly. As well, lack of audio and video may easily be detected automatically by, e.g., the user's set top box or any other user located equipment deployed in the delivery path of the audio-visual content.

In order to overcome the problem described above, a further method for processing data is suggested,
- wherein first data are received from a first network, said first data comprising feedback of at least one user on a quality of an audio and/or video content;
- wherein a quality is evaluated based on the first data.

Advantageously, at least one user of the delivered audio-visual content generates and provides feedback information on the audio and/or visual quality. Preferably, a plurality of users provides such feedback information. Consequently, a relevance of a quality impairment may be indicated by a particular number of users, i.e., a significant high number of users indicating the same or a similar kind of quality impairment. With a high probability, any real or significant impairment is of relevance to a significant portion of users.

The receipt of feedback information may furthermore enable monitoring of relevant received quality by the service provider or the network operator. It is a further advantage that feedback data are received from the first network that might be different from the network which delivers the audio-visual content. The feedback information may be provided via any backward channel, e.g., via a PSTN.

Advantageously, said first data is provided by several users and is based on such information to decide, whether a particular content (e.g. within a given time range) is of deteriorated quality. As a consequence, an event may be triggered, e.g., an alarm can be launched to an operator or provider based on the evaluation.

According to an embodiment, the method comprises the following step:
- wherein the quality of said audio and/or video content is evaluated based on the first data and on second data, wherein the second data are based on the quality of the audio and/or visual content.

The second data are preferably determined locally and/or received e.g. from the first network. The second data may have an impact on the quality and are preferably determined by or in components of the network, wherein said components may provide, e.g., deliver, transmit, or transport the audio-visual content to the user, or by or in user-located equipment that receives the audio and/or video content.

The determination is preferably automatically provided and it may comprise a detection of deterioration's beginning and end. This enables a more accurate assessment of the audio and/or visual quality of the delivered audio-visual content. Thus, the user feedback data and the detected data are combined in order to determine the quality.

In yet another embodiment the second data are determined by at least one of the following:
- a component of the first or a second network;
- a server;
- a streaming and/or content server;
- a core edge router;
- an access network DSLAM;
- a DSL modem;
- a set top box;
- a TV;
- a computer;
- a user device;
- a user located equipment;
- a phone;
- a personal digital assistant.

This provides the advantage that any network element and/or user located equipment, e.g., any network termination equipment, that transports audio-visual content to the user can be included to provide data for evaluation of the quality. This significantly improves the quality evaluated.

In a yet further embodiment, the second data are assigned to a time and/or to a time interval.

Hence, the quality assessment and/or the period of deterioration can be correlated to a duration or a time interval.

In another embodiment, the evaluated audio and/or video quality is at least temporarily stored and/or in particular made accessible for diagnostic reporting and/or real-time viewing purposes.

One advantage of this embodiment is real time viewing of the current degree of an audio and/or a visual quality. Furthermore, diagnostic reporting is enabled. Preferably, diagnostic reporting and real-time viewing is related to at least one audio-visual content. This content can be currently delivered or it can already be delivered to the user. Current status as well as the past and/or history information can be provided.

In a next embodiment, the evaluated audio and/or video quality of said audio and/or video content initiates and /or triggers and/or determines an urgency of a predefined action, in particular an alarm.

This provides the advantage that an appropriate action can be taken depending on the evaluated quality. The action can be an update of a statistics, quality or performance relevant data, the information or notification of the service provider or the network operator on appropriate repair actions and their respective urgency, as well as an alarm, that usually means immediate or soon reaction by the service provider or the network operator. Advantageously, the type of reaction as well as the urgency may be related to the evaluated quality.

In a next embodiment no event, in particular no alarm, is triggered, if the first data indicate no urgency.

The first data may not define a necessity of an alarming event. Hence, a misuse of the quality feedback can advantageously be avoided. For example, if there is no problem in the network due to detected problems, generated impairment feedback may not trigger any alarming.

According to a further embodiment, the first data determine an urgency of an event, in particular an alarm that is based on the second data.

The second data may indicate that an event, e.g. an alarm, needs to be initiated, but such trigger may depend on the first data, i.e. if there is no indication from the users, that bad quality is received, no such alarm may be triggered even in case the second data may indicate deteriorated quality.

This provides the advantage that the audio and/or visual quality evaluated, e.g., by the combination of generated and detected data, may have an impact on a type of event and/or alarm. In case of missing user feedback and based on the mere presence of second data indicating a deterioration of quality, alarming may be classified as less or not important, thus removing a necessity of immediate repair actions thereby saving cost for the service provider and/or network operator.

A server may implement the method described above and it may over time use the first and second data together to provide more accurate diagnostic results. For example, if the system recognizes packet loss and at the same time does not receive any user generated reports on bad or deteriorated quality, it may raise an amber alarm. However, if the system recognizes packet loss and receives user generated impairment reports within the same timeframe, it may raise a red alarm triggering an immediate event. Thus a cost optimal and efficient alarming reflecting the needs of the user, the service provider and the network operator can be provided herewith.

In another embodiment, the evaluated quality of said audio and /or video content is based on a type of any user located equipment and/or its geographic location.

Quality related problems originating from the equipment type of the user, e.g., the type of the user's set top box or the users' location can advantageously be detected. Furthermore, a diagnostic reporting and/or a real time viewing may be provided based on a type of the user located equipment and/or its geographic location. Thus quality related problems originating from the equipment type of the user or the users' location can advantageously be presented via diagnostic reporting and/or real time viewing. Via diagnostic reporting quality related problems of the past or the recent past may be provided, whereas via real time viewing current or ongoing quality related problems may be presented. For example the latter may help to answer the question, if the set top box of type A has currently a quality related problem, or the question, if there currently is any quality related problem in a geographical region, e.g. a city.

According to a next embodiment, the first data are assigned to a time or a time interval associated with the generation of the first data.

According to a further embodiment, the audio and/or video content is provided via at least one of the following:
- a satellite;
- a terrestrial radio antenna;
- a switched network;
- a fixed network;
- a mobile network;
- a cable TV network;
- a data network;
- a IP based network

The audio-visual content can be delivered via broadcast, multicast and/or unicast over satellite, terrestrial radio, switched fixed or mobile networks, cable TV networks, data networks and/or IP based networks.

Consequently all kinds of network-based delivery of the audio-visual content may be used. Point to multipoint delivery of broad-/multicasting as well as point-to-point delivery of video on demand and personal video recording applications can be used.

The problem stated above is also solved by a device comprising a and/or being associated with a processor unit and/or a hardwired circuit and/or a logic device that is arranged such that any of the methods described herein is executable thereon.

According to an embodiment said device is a communication device, in particular a or being associated with one of the following:
- a set top box;
- a television:
- a computer;
- a user device;
- a phone;
- a personal digital assistant.
- a component of the first network;
- a server;
- a streaming and/or content server;
- a core/edge router;
- an access network DSLAM;
- DSL modem.

The problem stated supra is further solved by a communication system comprising the device as described herein.

Embodiments of the invention are shown and illustrated in the following figures:
- Fig.1: presents a diagram showing how a user submits quality feedback with minimal effort;
- Fig.2: presents an implementation diagram showing the interconnection of set top box, STB quality monitoring server, and end-to-end quality monitoring and diagnostic system
- Fig.3: presents functional blocks and interfaces of an STB quality monitoring server.
- Fig.4: presents functional blocks and interfaces of an end-to-end quality monitoring and diagnostic system.

The approach provided in particular enables the user to submit preferably in real-time quality impairment feedback. Such feedback may comprise a timestamp and it may be provided by the user via a remote control and via a user interface of a set top box.

The user may report any quality impairment, wherein the reportable quality impairments may be pre-defined with a set of short descriptions of quality impairment categories as described below. Advantageously, the description relates as closely as possible to the quality impairment and is provided in layman terms so as to be understood by a wide demography of users.

Preferably following quality impairment categories are predefined:
(1) Audio artefact: Audio data are out of synchronization with video data (possible values are: large, medium, small);
(2) Audio artefact: Clipping audio is received (possible values are: regular, intermittent);
(3) Audio artefact: No sound is received (possible duration is: long, medium, short);
(4) Video artefact: No picture is received (possible values are: regular, intermittent; possible duration is: long, medium, short);
(5) Video artefact: Blocky video is received (possible intensity is: high, medium, small);
(6) Video artefact: Video with lines is received (possible values are: horizontal, vertical, diagonal)
(7) Artefact: No interactivity is available (possible values are: regular, intermittent; possible duration is: long, medium, short)
(8) Artefact: Interactivity is corrupted (possible intensity is: high, medium, small);

To make the reporting as easy as possible to the user, s/he may generate the report with a set of remote control hotkey combinations, preferably with a small number of keystrokes.

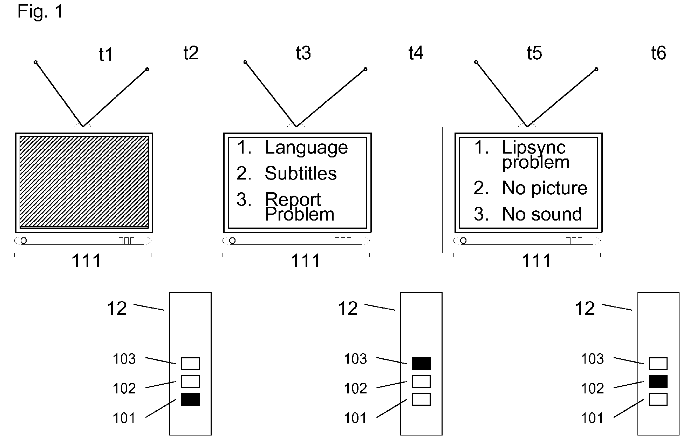

An exemplary scenario of user interaction is shown in **Fig.1****.** At a time t1 loss of video occurs at a television 111. This leads to quality feedback input via an input device 112 at a time t2. Pressing of a blue button 101 of the input device 112 opens a main user menu on the television 111 at a time t3.

For reporting a quality issue, the user selects a problem reporting option no.3 by pressing a no.3 button 103 at the input device 112 at a time t4. This opens a selection menu for reporting quality impairments on the television 111 at a time t5. A lack of video output is reported by selecting an option no.2 by pressing a no.2 button 102 at the input device 112 at a time t6.

The input device 112 can be a local input device of the television 111, the set top box or of any other user equipment. The input device 112 can also be a remote control of said user equipment or any other device providing control functionality for said user equipment, e.g., a mobile phone or a personal digital assistant.

The usage of the feedback reporting results in a high acceptance of the user. The user is only bothered to generate quality feedback reports if the normal viewing experience is interrupted by deteriorated data. As the viewing experience is already being interrupted, such generation of feedback reports does not degrade the actual situation.

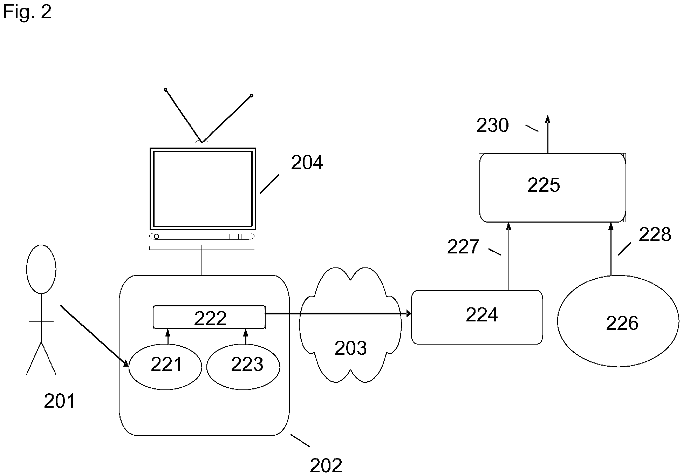

Fig.2 shows a typical implementation. A set top box 202 is typically connected to a television 204. A feedback component 221 resides in the set top box 202 as a software agent and is invoked by a user 201 on-demand when s/he experiences an audio-visual impairment. This feedback component 221 delivers a user interface with specific impairment categories the user 201 may choose from along with the details of the impairment in terms of duration and/or intensity. The feedback component 221 then delivers this data together with a timestamp to a quality monitoring agent 222 of the set top box 202.

The quality monitoring agent 222 may reside on the set top box 202 as a software agent and may be active when the set top box 202 is in a "in-service" state. The quality monitoring agent 222 collects both feedback and automatically detected quality data provided by a detection component 223 and sends it to an STB quality monitoring server 224, e.g., at a regular time interval or on request by an STB quality monitoring server 224 . The information of the STB quality monitoring server 224 is achieved by sending appropriate messages via a network 203. The network 203 can, e.g., be a cable TV network, an IP based network or a PSTN.

The STB quality monitoring server 224 correlates the feedback and the detection data based on a time indicator and provides the result to a higher level end-to-end quality monitoring and diagnostic system 225. A reporting 227 of the STB quality monitoring server 224 is preferably done via messages that are, e.g., sent over a direct cable and/or a wireless connection, a LAN, the network 203 or any other network.

The reporting 227 may comprise the evaluated quality of audio-visual content based on feedback and detection data or it may comprise quality based alarms. The feedback and the detection data are correlated for an increased accuracy regarding a quality impairment identification. To allow for time differences between the feedback report and the error report due to fault detection or performance degradation, a correlation tolerance window is defined by or with the STB quality monitoring server 224. This tolerance window, for example 5 minutes, allows the feedback and error reports to be correlated to a single impairment event.

The system does not rely on 100% feedback from the users. Even a subset of the users submitting feedback reports may be utilized in order to provide a better accuracy of alarms based on reports due to fault detection and/or performance degradation.

The higher level end-to-end quality monitoring and diagnostic system 225 further correlates the set top box quality monitoring data together with monitoring data from other components 226 within the end-to-end delivery system for audio-visual content to provide a final correlation and diagnostic. A reporting 228 of other network components 226 is preferably conveyed via messages. For example, such messages are sent over a direct cable and/or wireless connection, a LAN, the network 203 or any other network.

The higher level end-to-end quality monitoring and diagnostic system 225 uses the correlated feedback and detection data from the STB quality monitoring server 224 to provide a more accurate set of quality diagnostics with the a prioritization information for fault resolution purposes. An output 230 of the higher level end-to-end quality monitoring and diagnostic system 225 is provided via appropriate interfaces. The output 230 may comprise quality related diagnostic reports and alarms based on quality related monitoring of the set top box 202 and said other network components 226.

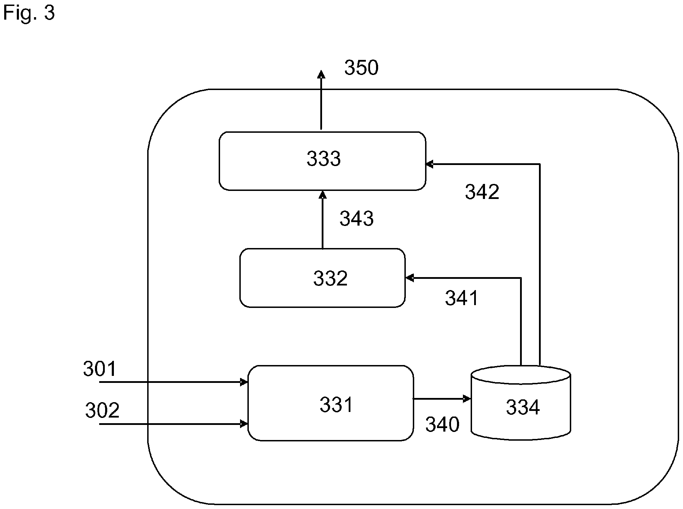

**Fig.3** shows the STB quality monitoring server 224 in more detail. A data collector 331 collects both detection data 301 and feedback data 302 provided by the STB quality monitoring agent 222 (see Fig.2) for a database 334. The detection data 301 that may be reported may comprise:
- A number of packet losses in succession in view of a given time period;
- A number of MPEG-2 TS buffer underflow events in view of a given time period;
- A number of MPEG-2 TS buffer overflow events in view of a given time period.

The feedback data 302 reported are according to the list of impairment categories provided above.

A correlation engine 332 reviews the data collected over fixed (or variable, in particular in view of predetermined) time intervals, e.g., of 60 minutes duration, and correlates them.

A simple correlation algorithm may be to build thresholds of detection data against each reported feedback impairment. So, for example, the following output (messages) could be derived:
- For a type A set top box on channel 1, 10 packets are lost in succession: Blocky video and clipping audio is provided as output.
- For the type A set top box on channel 2, 5 packets are lost in succession: Blocky video and clipping audio is provided as output.
- For the type A set top box on user channel 1, more than 20 packets are lost in succession: No picture and no audio is provided as output.
- For the type A set top box on channel 2, more than 20 packets are lost in succession: No picture and no audio is provided as output.
- For the type A set top box on channel 1, buffer underflow occurs: Audio data is out of synchronization with video data.
- For the type A set top box on channel 1, buffer overflow occurs: Audio data is out of synchronization with video data.

As can be seen from the output above, the feedback impairment can specifically be correlated or provided on a per device type and on a content basis. This allows each different device type to deal differently with a detected impairment. Additionally, the detected impairment may have a different feedback impairment effect based on the content depending on the content's bit rate and/or its encoding.

The umbrella end-to-end quality monitoring system may not be able to deal with data from thousands or millions of set top boxes 202. So, an alarm engine 333 tunes its reporting thresholds based on the output of the correlation engine 332 such that it only reports quality alarms 350 to the higher level system if the detection data thresholds are exceeded or if feedback impairments are reported.

Hence, even if only a subset of the users submits feedback reports, this reduced amount of data helps to tune the detection reporting thresholds for the other set top boxes 202 that did not convey any feedback data. The reports can comprise the following information, wherein preferably codes are combined with the information so as to be handled in an automated fashion by any higher level system:
- For the type A set top box on channel 1 and in region X blocky video is reported. (Code 1 indicates amber alarm.)
- For the type B set top box on channel 4 in region X loss of picture is reported. (Code 2 indicates red alarm.)

Communication between the components described above is according to the depicted arrows 340, 341, 342, 343. This communication is preferably provided via messages, which can be provided server-internally or based on external connections.

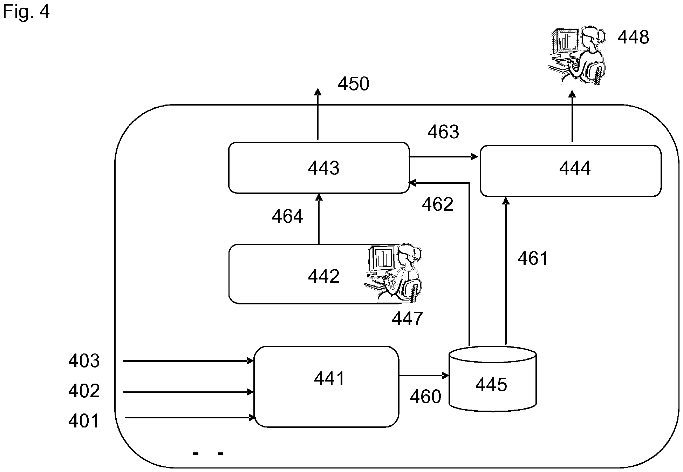

**Fig.4** shows the end-to-end quality monitoring and diagnostic system 225. A Data Collector 441 collects quality alarms from various lower layer element monitoring servers and stores them into a database 445. Incoming messages can be network alarms 401, head-end (e.g. TV head ends providing audio-visual content) alarms 402 or set top box alarms 403.

A heuristics engine 442 contains rules defined by a service provider for generating diagnostic reports. Correlating alarms from different end-to-end system components and providing accurate and useful diagnostic reports is a task of a subject matter expert 447, which, e.g., encodes rules as follows:
- If a set top box quality alarm code amounts to 1 AND a network quality alarm code amounts to 2 THEN the problem is a DSL line, a DSL line test is initiated.
- If a set top box quality alarm code amounts to 2 AND a head-end quality alarm code amounts to 47 THEN the problem is a channel source, a call to a channel provider is initiated.

A reporting engine 443 analyses various quality alarms over a time period providing a correlation tolerance window to allow for time deviation between quality alarms coming from different lower layer systems. The reporting engine 443 then applies the rules defined in the heuristics engine 442 to these alarms and if there is a match it will generate a diagnostic report 450. If a rule does not reveal a match, the reporting engine 443will not generate a diagnostic report 450.

A real-time view unit 444 provides a graphical snapshot of the current state of the end-to-end system. This snapshot is conveyed to a further subject matter expert 448. The snapshot can be used to continuously monitor the health of the system and reveal specific problem areas to get more information about the problem.

Communication between the components described above is according to the depicted arrows 460, 461, 462, 463. 464. This communication is preferably provided via messages, which can be provided server internally or based on external connections.

### Abbreviations

- CD: Compact Disc
- DSL: Digital Subscriber Line
- DSLAM: Digital Subscriber Line Access Multiplexer
- DVD: Digital Video Disc / Digital Versatile Disc
- HD: Hard Disc
- IP: Internet Protocol
- LAN: Local Area Network
- MPEG: Moving Picture Experts Group
- TS: Transport Stream
- PSTN: Public Switched Telephone Network
- QoS: Quality of Service
- STB: Set Top Box
- TV: Television
- VoD: Video on Demand

## Claims

1. A method for data processing, comprising
- receiving first data from a first network,
- the first data comprising feedback of a plurality of users on a quality of an audio and/or video content,
- the feedback of the plurality of users on the quality of the audio and/or video content being provided by the plurality of users via a respective remote control or via a user interface of a respective set top box by selection from the following quality impairment categories:
(1) Audio artefact: Audio data are out of synchronization with video data;
(2) Audio artefact: Clipping audio is received;
(3) Audio artefact: No sound is received;
(4) Video artefact: No picture is received;
(5) Video artefact: Blocky video is received;
(6) Video artefact: Video with lines is received;
(7) Artefact: No interactivity is available;
(8) Artefact: Interactivity is corrupted;
- receiving second data,
- the second data being automatically determined by or in components of the first network or by or in user-located equipment, which equipment receives the audio and/or video content,
- the second data are being based on the quality of the audio and/or video content,
- the second data indicating that an alarm needs to be initiated due to deteriorated quality of the audio and/or video content,
- evaluating, at a server, the quality of said audio and/or video content based on the first data and on the second data,
- the evaluated audio and/or video quality of said audio and/or video content initiating and/or triggering and/or determining an urgency of the alarm,
wherein the type of the alarm is related to the evaluated audio and/or video quality, wherein no urgency is triggered, if the first data indicate no urgency,
wherein the first data indicate the urgency of the alarm, which alarm is based on the second data,
wherein, if packet loss is recognized by the server in the second data and at the same time the server does not receive any first data comprising user generated reports on bad or deteriorated quality, it raises an amber alarm, whereas, if the server recognizes packet loss in the second data and receives first data comprising user generated impairment reports within the same timeframe, it raises a red alarm triggering an immediate event, wherein the amber alarm corresponds to an alarm without urgency and the red alarm corresponds to an alarm with urgency.

2. The method according to claim 1, the method further comprising
providing at least one of the following and determining the second data therein:
- a component of the first or a second network;
- a server;
- a streaming and/or content server;
- a core edge router;
- an access network DSLAM;
- a DSL modem;
- a set top box;
- a TV;
- a computer;
- a user device;
- a user located equipment;
- a phone;
- a personal digital assistant.

3. The method according to any of the preceding claims,
wherein the second data are assigned to a time and/or to a time interval.

4. The method according to any of the preceding claims,
wherein the evaluated audio and/or video quality is at least temporarily stored and/or made accessible via reporting to a system.

5. The method according to any of the preceding claims,
wherein the evaluated quality of said audio and/or video content is based on a type of any user located equipment and/or its geographic location.

6. The method according to any of the preceding claims,
wherein the first data are assigned to a time or a time interval associated with the generation of the first data.

7. The method according to any of the preceding claims,
wherein the audio and/or video content is provided via at least one of the following:
- a satellite;
- a terrestrial radio antenna;
- a switched network;
- a fixed network;
- a mobile network;
- a cable TV network;
- a data network;
- a IP based network.

8. The method according to any of the preceding claims,
wherein the second data are determined in the set top box of the at least one user and/or received from the first network.

9. The method according to any of the preceding claims,
wherein audio-visual content comprising the audio and/or video content is delivered via broadcast and/or multicast.

10. A device comprising a processor unit or a hardwired circuit or a logic device, said device being arranged to execute the method according to claims 1 to 9.

11. The device according to claim 10, wherein said device is a communication device, in particular:
- a computer;
- a component of the first network;
- a server;
- a streaming and/or content server;
- a core/edge router;
- an access network DSLAM.

12. Communication system comprising the device according to any of claims 10 or 11.

## Patentansprüche

1. Verfahren zur Verarbeitung von Daten, das Folgendes umfasst:
- Empfangen von ersten Daten von einem ersten Netzwerk,
- wobei die ersten Daten eine Rückmeldung von mehreren Benutzern zu einer Qualität eines Audio- und/oder Videoinhalts umfassen,
- wobei die Rückmeldung der mehreren Benutzer zu der Qualität des Audio- und/oder Videoinhalts von den mehreren Benutzern via eine jeweilige Fernbedienung oder via eine Benutzerschnittstelle einer jeweiligen Set-Top-Box durch Auswählen aus den folgenden Qualitätsminderungskategorien bereitgestellt wird:
(1) Audioartefakt: Audiodaten sind nicht mit Videodaten synchron;
(2) Audioartefakt: Beschnittenes Audio wird empfangen;
(3) Audioartefakt: Es wird kein Ton empfangen;
(4) Videoartefakt: Es wird kein Bild empfangen;
(5) Videoartefakt: Blockiges Video wird empfangen;
(6) Videoartefakt: Video mit Linien wird empfangen;
(7) Artefakt: Es ist keine Interaktivität verfügbar;
(8) Artefakt: Interaktivität ist beschädigt;
- Empfangen zweiter Daten
- wobei die zweiten Daten automatisch von oder in Komponenten des ersten Netzwerks oder von oder in einer beim Benutzer befindlichen Ausrüstung bestimmt werden, wobei die Ausrüstung den Audio- und/oder Videoinhalt empfängt,
- wobei die zweiten Daten auf der Qualität des Audio- und/oder Videoinhalts basieren,
- wobei die zweiten Daten anzeigen, dass aufgrund der verschlechterten Qualität des Audio- und/oder Videoinhalts ein Alarm initiiert werden muss,
- Beurteilen an einem Server der Qualität des Audio- und/oder Videoinhalts auf Basis der ersten Daten und der zweiten Daten,
- wobei die beurteilte Audio- und/oder Videoqualität des Audio- und/oder Videoinhalts eine Dringlichkeit des Alarms initiiert und/oder auslöst und/oder bestimmt,
wobei sich der Typ des Alarms auf die beurteilte Audio- und/oder Videoqualität bezieht, wobei keine Dringlichkeit ausgelöst wird, wenn die ersten Daten keine Dringlichkeit anzeigen,
wobei die ersten Daten die Dringlichkeit des Alarms anzeigen,
wobei der Alarm auf den zweiten Daten basiert,
wobei, wenn vom Server in den zweiten Daten ein Paketverlust erkannt wird und der Server gleichzeitig keine ersten Daten empfängt, die von einem Benutzer erzeugte Berichte über eine schlechte oder verschlechterte Qualität umfassen, er einen gelben Alarm herbeiführt, wohingegen, wenn der Server in den zweiten Daten einen Paketverlust erkennt und innerhalb desselben Zeitrahmens erste Daten empfängt, die von einem Benutzer erzeugte Minderungsberichte umfassen, er einen roten Alarm herbeiführt, wodurch ein unmittelbares Ereignis ausgelöst wird,
wobei der gelbe Alarm einem Alarm ohne Dringlichkeit entspricht und der rote Alarm einem Alarm mit Dringlichkeit entspricht.

2. Verfahren nach Anspruch 1, wobei das Verfahren ferner Folgendes umfasst:
Bereitstellen mindestens eines des Folgenden und Bestimmen der zweiten Daten darin:
- eine Komponente des ersten oder eines zweiten Netzwerks;
- einen Server;
- einen Streaming- und/oder Inhaltsserver;
- einen Core/Edge-Router;
- einen Zugangsnetzwerk-DSLAM;
- ein DSL-Modem
- eine Set-Top-Box
- einen Fernseher;
- einen Computer;
- eine Benutzervorrichtung;
- eine bei einem Benutzer befindliche Ausrüstung;
- ein Telefon;
- einen persönlichen digitalen Assistenten.

3. Verfahren nach einem der vorhergehenden Ansprüche, wobei die zweiten Daten einer Zeit und/oder einem Zeitintervall zugeordnet werden.

4. Verfahren nach einem der vorhergehenden Ansprüche, wobei die beurteilte Audio- und/oder Videoqualität mindestens vorübergehend gespeichert und/oder via Melden an ein System zugänglich gemacht wird.

5. Verfahren nach einem der vorhergehenden Ansprüche, wobei die beurteilte Qualität des Audio- und/oder Videoinhalts auf einem Typ einer beliebigen beim Benutzer befindlichen Ausrüstung und/oder deren geografischer Lage basiert.

6. Verfahren nach einem der vorhergehenden Ansprüche, wobei die ersten Daten einer Zeit oder einem Zeitintervall zugeordnet werden, die bzw. das mit der Erzeugung der ersten Daten verknüpft ist.

7. Verfahren nach einem der vorhergehenden Ansprüche, wobei der Audio- und/oder Videoinhalt via mindestens einem der Folgenden bereitgestellt wird:
- einem Satelliten;
- einer terrestrischen Funkantenne;
- einem Vermittlungsnetzwerk;
- einem Festnetzwerk;
- einem Mobilfunknetzwerk;
- einem Kabelfernsehnetzwerk;
- einem Datennetzwerk;
- einem IP-basierten Netzwerk.

8. Verfahren nach einem der vorhergehenden Ansprüche, wobei die zweiten Daten in der Set-Top-Box des mindestens einen Benutzers bestimmt und/oder vom ersten Netzwerk empfangen werden.

9. Verfahren nach einem der vorhergehenden Ansprüche, wobei audiovisueller Inhalt, der den Audio- und/oder Videoinhalt umfasst, via Broadcast und/oder Multicast geliefert wird.

10. Vorrichtung, die eine Prozessoreinheit oder eine festverdrahtete Schaltung oder eine Logikvorrichtung umfasst, wobei die Vorrichtung dazu angeordnet ist, das Verfahren nach den Ansprüchen 1 bis 9 auszuführen.

11. Vorrichtung nach Anspruch 10, wobei die Vorrichtung eine Kommunikationsvorrichtung ist, insbesondere:
- ein Computer;
- eine Komponente des ersten Netzwerks;
- ein Server;
- ein Streaming- und/oder Inhaltsserver;
- ein Core/Edge-Router;
- ein Zugangsnetzwerk-DSLAM.

12. Kommunikationssystem, das die Vorrichtung nach einem der Ansprüche 10 oder 11 umfasst.

## Revendications

1. Un procédé de traitement de données, comprenant
- la réception de premières données à partir d'un premier réseau,
- les premières données comprenant des informations en retour d'une pluralité d'utilisateurs relatives à une qualité d'un contenu audio et/ou vidéo,
- les informations en retour de la pluralité d'utilisateurs relatives à la qualité du contenu audio et/ou vidéo étant fournies par la pluralité d'utilisateurs par l'intermédiaire d'une télécommande respective ou par l'intermédiaire d'une interface utilisateur d'un décodeur respectif par une sélection parmi les catégories de dégradation de la qualité suivantes :
(1) Artefact audio : des données audio sont désynchronisées par rapport à des données vidéo,
(2) Artefact audio : de l'audio d'écrêtage est reçu,
(3) Artefact audio : aucun son n'est reçu,
(4) Artefact vidéo : aucune image n'est reçue,
(5) Artefact vidéo : de la vidéo en blocs est reçue,
(6) Artefact vidéo : de la vidéo avec des lignes est reçue,
(7) Artefact : aucune interactivité n'est disponible,
(8) Artefact : l'interactivité est corrompue,
- la réception de deuxièmes données,
- les deuxièmes données étant automatiquement déterminées par ou dans des composants du premier réseau ou par ou dans un équipement installé chez l'utilisateur, ledit équipement recevant le contenu audio et/ou vidéo,
- les deuxièmes données sont basées sur la qualité du contenu audio et/ou vidéo,
- les deuxièmes données indiquant qu'une alarme doit être déclenchée du fait d'une qualité détériorée du contenu audio et/ou vidéo,
- l'évaluation, au niveau d'un serveur, de la qualité dudit contenu audio et/ou vidéo en fonction des premières données et des deuxièmes données,
- la qualité audio et/ou vidéo évaluée dudit contenu audio et/ou vidéo lançant et/ou déclenchant et/ou déterminant une urgence de l'alarme,
dans lequel le type de l'alarme est lié à la qualité audio et/ou vidéo évaluée, aucune urgence n'étant déclenchée si les premières données indiquent aucune urgence,
dans lequel les premières données indiquent l'urgence de l'alarme, ladite alarme étant basée sur les deuxièmes données, dans lequel, si une perte de paquets est reconnue par le serveur dans les deuxièmes données et, simultanément, le serveur ne reçoit pas de premières données comprenant des rapports générés par l'utilisateur relatifs à une mauvaise qualité ou une qualité détériorée, il déclenche une alarme ambre, tandis que, si le serveur reconnaît une perte de paquets dans les deuxièmes données et reçoit des premières données comprenant des rapports de dégradation générés par l'utilisateur à l'intérieur du même créneau horaire, il déclenche une alarme rouge déclenchant un événement immédiat, l'alarme ambre correspondant à une alarme sans urgence et l'alarme rouge correspondant à une alarme avec urgence.

2. Le procédé selon la revendication 1, le procédé comprenant en outre
la fourniture d'au moins un des éléments suivants et la détermination des deuxièmes données dans celui-ci :
- un composant du premier ou d'un deuxième réseau,
- un serveur,
- un serveur de diffusion en continu et/ou de contenus,
- un routeur de bordure noyau,
- un DSLAM de réseau d'accès,
- un modem DSL,
- un décodeur,
- une télévision,
- un ordinateur,
- un dispositif d'utilisateur,
- un équipement installé chez l'utilisateur,
- un téléphone,
- un assistant numérique personnel

3. Le procédé selon l'une quelconque des revendications précédentes, dans lequel les deuxièmes données sont attribuées à un instant et/ou à un intervalle temporel.

4. Le procédé selon l'une quelconque des revendications précédentes, dans lequel la qualité audio et/ou vidéo évaluée est au moins temporairement conservée en mémoire et/ou rendue accessible par l'intermédiaire d'un signalement à un système.

5. Le procédé selon l'une quelconque des revendications précédentes, dans lequel la qualité évaluée dudit contenu audio et/ou vidéo est basée sur un type d'un équipement installé chez l'utilisateur donné et/ou de son emplacement géographique.

6. Le procédé selon l'une quelconque des revendications précédentes, dans lequel les premières données sont attribuées à un instant ou un intervalle temporel associé à la génération des premières données.

7. Le procédé selon l'une quelconque des revendications précédentes, dans lequel le contenu audio et/ou vidéo est fourni par l'intermédiaire d'au moins un des éléments suivants :
- un satellite,
- une antenne radio terrestre,
- un réseau commuté,
- un réseau fixe,
- un réseau mobile,
- un réseau de télévision par câble,
- un réseau de données,
- un réseau de type IP.

8. Le procédé selon l'une quelconque des revendications précédentes, dans lequel les deuxièmes données sont déterminées dans le décodeur du au moins un utilisateur et/ou reçues à partir du premier réseau.

9. Le procédé selon l'une quelconque des revendications précédentes, dans lequel un contenu audiovisuel comprenant le contenu audio et/ou vidéo est remis par l'intermédiaire d'une radiodiffusion et/ou d'une multidiffusion.

10. Un dispositif comprenant une unité processeur ou un circuit câblé ou un dispositif logique, ledit dispositif étant agencé de façon à exécuter le procédé selon les revendications 1 à 9.

11. Le dispositif selon la revendication 10, dans lequel ledit dispositif est un dispositif de communication, plus particulièrement :
- un ordinateur,
- un composant du réseau fixe,
- un serveur,
- un serveur de diffusion en continu et/ou de contenus,
- un routeur de bordure/noyau,
- un DSLAM de réseau d'accès.

12. Un système de communication comprenant le dispositif selon l'une quelconque des revendications 10 ou 11.
